(19) Europäisches Patentamt
European Patent Office
Office européen des brevets

(11) Veröffentlichungsnummer: **0 000 568**
**B1**

(12) # EUROPÄISCHE PATENTSCHRIFT

(21) Anmeldenummer: **78100476.7**

(22) Anmeldetag: **21.07.78**

(51) Int. Cl.³: **C 08 G 18/10,**
C 08 G 18/32, C 08 G 18/08

(54) **Verfahren zur Herstellung von wässrigen Dispersionen oder Lösungen von Isocyanat-Polyadditionsprodukten; Verwendung dieser Dispersionen bzw. Lösungen zur Herstellung von Überzügen und Beschichtungen**

(30) Priorität: **30.07.77 DE 2734576**

(43) Veröffentlichungstag der Anmeldung:
**07.02.79 Patentblatt 79/03**

(45) Bekanntmachung des Hinweises auf die Patenterteilung:
**20.08.80 Patentblatt 80/17**

(84) Benannte Vertragsstaaten:
**BE DE FR GB NL**

(56) Entgegenhaltungen:
**FR - A - 1 521 170**
**FR - A - 1 576 476**
**FR - A - 2 143 375**
**NL - A - 7 614 550**

(73) Patentinhaber: **Bayer Ag**
**Zentralbereich Patente, Marken und Lizenzen**
**D - 5090 Leverkusen 1,**
**Bayerwerk (DE)**

(72) Erfinder: **Wenzel, Wolfgang, Dr.**
**Peter-Landwehr-Strasse 13**
**D - 5060 Bergisch-Gladbach 2 (DE)**
**Meckel, Walter, Dr.**
**Zonser Strasse 9**
**D - 4040 Neuss (DE)**
**Pedain, Josef, Dr.**
**Haferkamp 6**
**D - 5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 000 568 B1

Courier Press, Leamington Spa, England.

# Verfahren zur Herstellung von wäßrigen Dispersionen oder Lösungen von Isocyanat-Polyadditionsprodukten; Verwendung dieser Dispersionen bzw Lösungen zur Herstellung von Überzügen und Beschichtungen

Die vorliegende Erfindung betrifft ein neues Verfahren zur Herstellung von wäßrigen Dispersionen bzw. Lösungen von Isocyanat-Polyadditionsprodukten, sowie ihre Verwendung zur Herstellung von Überzügen und Beschichtungen.

Verfahren zur Herstellung von stabilen, wäßrigen Polyurethan-Polyharnstoff-Dispersionen sind bekannt (z.B. DE—C 1 184 946, DE—C 1 178 586, DE—B 1 237 306, DE—A 1 495 745, DE—A 1 595 602, DE—A 1 770 068, DE—A 2 019 324, DE—A 2 314 512, vgl. auch D. Dieterich et al, Angew. Chem. *82,* 53 (1970)). Die beschriebenen Dispersionen beruhen auf dem Prinzip, in eine makromolekulare Kette eines Polyurethan-(Polyharnstoff-) Moleküls hydrophile Zentren einzubauen. Diese hydrophilen Zentren oder sogenannten inneren Emulgatoren sind in den bekannten Dispersionen ionische Gruppen oder Äthylenoxid-Gruppierungen aufweisende Polyäthersegmente. Diese hydrophilen Zentren werden entweder in das Präpolymer in Form spezieller Diole eingebaut oder als modifizierte Amine zur Kettenverlängerung der Präpolymeren eingesetzt, die je mindestens zwei endständige NCO-Funktionen besitzen.

Zur Herstellung der bisher bekannten Dispersionen kann man sich verschiedener Verfahren bedienen, die z.B. in D. Dieterich und H. Reiff, Angew. makromol. Chemie 26, 85 (1972) beschrieben sind. Im allgemeinen wird entweder die Lösung eines Polyurethans in einem organischen Lösungsmittel in eine wäßrige Dispersion überführt oder es wird eine Präpolymerstufe mit oder ohne Lösungsmittel in flüssiger Form in Wasser dispergiert. Man kann beispielsweise ein flüssiges NCO-Gruppen aufweisendes Präpolymerionomer unter kräftigem Rühren in Wasser eintragen, wobei zunächst eine Emulsion des Präpolymeren entsteht, die durch Kettenverlängerung mit beispielsweise einem in Wasser gelösten Di-oder Polyamin zum hochmolekularen Polyurethan-Harnstoff weiterreagiert. Wegen der Hydrophilie des NCO-Präpolymeren und seiner hierdurch hervorgerufenen guten Verträglichkeit mit dem Wasser tritt hierbei in unterschiedlicher Größenordnung immer eine unerwünschte Reaktion von Isocyanatgruppen mit Wasser auf, welche zu einem unkontrollierten Molekülaufbau führt.

Durch die vorliegende Erfindung wird nun ein neues Prinzip zur Herstellung von wäßrigen Dispersionen oder Lösungen von Isocyanat-Polyadditionsprodukten vorgestellt, bei welchem derartige Nebenreaktionen weitgehend ausgeschlossen sind. Das neue erfindungsgemäße Prinzip besteht darin, daß man hydrophile, d.h. in Wasser lösliche bzw. dispergierbare Urethanpräpolymere mit endständigen Amino- oder Semicarbazidgruppen in wäßriger Phase mit einem hydrophoben Kettenverlängerungsmittel, vorzugsweise einem hydrophoben Diisocyanat, verlängert, wobei wegen der Hydrophobie des Isocyanats kaum eine Nebenreaktion mit dem, die kontinuierliche Phase bildenden, Wasser eintritt.

Gegenstand der vorliegenden Erfindung ist somit ein Verfahren zur Herstellung von wäßrigen Dispersionen oder Lösungen von Isocyanat-Polyadditionsprodukten, dadurch gekennzeichnet, daß man Oligourethane, welche

a) ein durchschnittliches Molekulargewicht von weniger als 15 000 aufweisen,

b) 0—120 Milliäquivalente pro 100 g Feststoff an eingebauten ionischen Gruppen und/oder 0—25 Gew.-% an eingebauten, innerhalb einer Polyätherkette vorliegenden Äthylenoxideinheiten $—CH_2—CH_2—O—$ und/oder 0—30 Gew.-% an externen, nicht chemisch fixierten Emulgatoren aufweisen, wobei die Gesamtmenge der genannten hydrophilen Gruppen bzw. Hilfsmittel in einer die Dispergierbarkeit bzw. Löslichkeit der Oligourethane in Wasser gewährleistenden Menge vorliegt,

c) endständige primäre oder sekundäre aminische Aminogruppen oder endständige Semicarbazidgruppen mit mindestens einer endständigen —NH-Gruppierung aufweisen;

in wäßriger Phase mit einem mindestens difunktionellen mit den endständigen Amino- bzw. Semicarbazidgruppen im Sinne einer Additionsreaktion oder Kondensationsreaktion reagierenden Kettenverlängerungsmittel unter Kettenverlängerung der Oligourethane zur Reaktion bringt.

Gegenstand der vorliegenden Erfindung ist auch die Verwendung der nach diesem Verfahren erhältlichen Dispersionen bzw. Lösungen zur Herstellung von Überzügen und Beschichtungen.

Die beim erfindungsgemäßen Verfahren einzusetzenden Oligourethane sind gekennzeichnet durch

a) ein mittleres Molekulargewicht von weniger als 15 000, vorzugsweise von 1000—10 000,

b) einen Gesamtgehalt an die Dispergierbarkeit bzw. Löslichkeit in Wasser gewährleistenden Gruppen und/oder Emulgator, d.h. einen Gehalt an kationischen bzw. anionischen eingebauten Gruppen von 0 bis 120, vorzugsweise 0,5 bis 50 Milliäquivalenten pro 100 g Feststoff und/oder einen Gehalt an seitenständig, endständig und/oder innerhalb der Hauptkette eingebauten, innerhalb eines Polyäthersegmentes vorliegenden Äthylenoxid-Einheiten $—CH_2—CH_2—O—$ von 0—25, vorzugsweise 3 bis 18 Gew.-%, bezogen auf das Gesamtgewicht des Oligourethans und/oder einen Gehalt von 0 bis 30, vorzugsweise 5 bis 20, Gew.-%, bezogen auf das Gesamtgewicht des Oligourethans an externen, chemisch nicht eingebauten Emulgatoren,

c) endständige primäre bzw. sekundäre Aminogruppen oder endständige Semicarbazidgruppen mit mindestens einer endständigen —NH-Gruppe, wie sie durch Umsetzung von Isocyanatgruppen mit mindestens 2 —NH-Gruppen aufweisenden Hydrazinen entstehen.

Wesentlich ist hierbei das Molekulargewicht der Oligourethane. Es sollte vorzugsweise zwischen

1000 und 10 000 liegen. Grundsätzlich sind auch Präpolymere mit Durchschnittsmolekulargewichten zwischen 10 000 und 15 000 dispergierbar, wenn hierbei auch erhebliche Schwierigkeiten auftreten. Das Molekulargewicht des Oligourethans kann auf einfache und an sich bekannte Weise durch Art und Mengenverhältnisse der Aufbaukomponenten eingestellt werden. So wird beispielswiese durch Verwendung eines NCO-Überschusses bei der Herstellung der NCO-Präpolymeren verhindet, daß sich hochmolekulare Polyurethane bei der Isocyanatpolyadditionsreaktion aufbauen.

Das Durchschnittsmolekulargewicht läßt sich wie folgt rechnerisch aus der Stöchiometrie der Umsetzung ermitteln.

Setzt man beispielsweise 2 Mol einer Dihydroxyverbindung vom Molekulargewicht 2000, 1 Mol eines basischen Kettenverlängerungsmittels vom Molekulargewicht 119, 4,75 Mol Diisocyanat (Molekulargewicht Hydrazin 32) zu einem Oligourethan mit 2 endständigen Semicarbazidgruppen um, so errechnet sich das Molekulargewicht zu

$$MG = \frac{2}{3{,}5} (2 \times 2000 + 119 + 4{,}75 \times 168 + 3{,}5 \times 32)$$

$$\approx 2874$$

Zur Gewährleistung der Dispergierbarkeit bzw. Löslichkeit der Oligourethane werden vorzugsweise die genannten hydrophilen Gruppen in das Oligourethan eingebaut. Die Mitverwendung von externen Emulgatoren ist demgegenüber weniger bevorzugt.

Die Herstellung der beim erfindungsgemäßen Verfahren einzusetzenden Oligourethane geschieht über die Zwischenstufe der entsprechenden endständige Isocyanatgruppen aufweisenden Präpolymeren, die im übrigen bezüglich ihres Molekulargewichtes und bezüglich ihres Gehaltes an hydrophilen Gruppen den oben gemachten Ausführungen entsprechen, da bei der Überführung der endständigen Isocyanatgruppen in endständige Semicarbazid- bzw. Aminogruppen keine nennenswerte Molekulargewichtsvergrößerung eintritt. Dies bedeutet, daß im Falle des Einsatzes von Oligourethanen mit ionischen Gruppen oder mit nichtionischen hydrophilen Gruppen der genannten Art diese bereits in den als Zwischenprodukten zur Herstellung der erfindungsgemäßen Ausgangsmaterialien eingesetzten NCO-Präpolymeren vorliegen mit der einzigen Ausnahme, daß beim Einsatz von ionisch modifizierten Oligourethanen beim erfindungsgemäßen Verfahren auch denkbar ist, daß zunächst ein potentielle ionische Gruppen, d.h. insbesondere Carboxyloder Sulfonsäuregruppen aufweisendes NCO-Präpolymer hergestellt wird, dessen potentiellen ionischen Gruppen erst nach Überführung der NCO-Präpolymeren in endständige Aminogruppen oder Semicarbazidgruppen aufweisende Oligourethane in ionische Gruppen, insbesondere durch Neutralisation, überführt werden.

Vorzugsweise gelangen beim erfindungsgemäßen Verfahren Oligourethane zum Einsatz, welche endständig im statistischen Mittel 1,8—2,2, vorzugsweise 2, Amino- oder Semicarbazidgruppen aufweisen.

Aus obigen Darlegungen geht hervor, daß zur Herstellung der erfindungsgemäß einzusetzenden Oligourethane vorzugsweise difunktionelle NCO-Präpolymere eingesetzt werden.

Vorzugsweise handelt es sich hierbei um solche, welche eine oder mehrere ihre Löslichkeit bzw. Dispergierbarkeit in Wasser bedingende hydrophile Gruppierung aufweisen. Entsprechend oben gemachten Ausführungen ist es auch möglich, an sich hydrophobe NCO-Präpolymere einzusetzen, falls vor oder nach ihrer Überführung in endständige Aminogruppen oder Semicarbazidgruppen aufweisende Oligourethane für ihre Löslichkeit bzw. Dispergierbarkeit in Wasser durch Mitverwendung von externen Emulgatoren Sorge getragen wird. Selbstverständlich ist es auch denkbar, die Hydrophilie von eingebauten hydrophile Gruppen enthaltenden NCO-Präpolymeren bzw. aus ihnen hergestellten Oligourethanen, durch zusätzliche Mitverwendung von externen Emulgatoren zu erhöhen.

Soweit die chemische Natur der NCO-Präpolymeren den obigen Ausführungen entspricht, ist ihr genauer chemischer Aufbau nicht kritisch. Dies bedeutet insbesondere, daß im Prinzip alle NCO-Präpolymeren geeignet sind die bislang bereits bei der Herstellung von wäßrigen Polyurethan-Dispersionen oder -Lösungen zum Einsatz gelangten. Ihre Herstellung erfolgt nach bekannten Verfahren des Standes der Technik und ist beispielsweise in den DE—A 1 495 745, 1 495 847, 2 446 440, 2 340 512, der US—A 3 479 310, 3 756 992, den GB—A 1 158 088 oder 1 076 688 beschrieben.

Die Herstellung der bevorzugt einzusetzenden NCO-Präpolymeren mit chemisch eingebauten hydrophilen Gruppen geschieht in Analogie zu den Methoden, wie sie in den beispielhaft genannten Literaturstellen genannt sind. Ausgangsmaterialien zur Herstellung dieser NCO-Präpolymeren sind demzufolge

1. beliebige organische Polyisocyanate, vorzugsweise Diisocyanate der Formel

$$Q\,(NCO)_2$$

wobei Q für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit

7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 1-Isocyanato-3,3,5-trimethylisocyanatomethylcyclohexan, Isophorondiisocyanat, 4,4'-Diisocyanatodicyclohexylmethan, 4,4'-Diisocyanatodicyclohexylpropan-(2,2), 1,4-Diisocyanatobenzol, 2,4-Diisocyanatotoluol, 2,6-Diisocyanatotoluol, 4,4'-Diisocyanatodiphenylmethan, 4,4'-Diisocyanatodiphenylpropan-(2,2), p-Xylylen-diisocyanat oder $\alpha,\alpha,\alpha',\alpha'$-Tetramethyl-m- oder p-xylylen-diisocyanat, sowie aus diesen Verbindungen bestehende Gemische.

Es ist selbstverständlich auch möglich, die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden.

2. Beliebige organische Verbindungen mit mindestens zwei gegenüber Isocyanatgruppen reaktionsfähigen Gruppen, inbesondere insgesamt zwei Aminogruppen, Thiolgruppen, Carboxylgruppen und/oder Hydroxylgruppen aufweisende organische Verbindungen des Molekulargewichtsbereichs 62—10.000, vorzugsweise 1.000 bis 6.000. Bevorzugt werden die entsprechenden Dihydroxyverbindungen eingesetzt. Die Mitverwendung von im Sinne der Isocyanat-Polyadditionsreaktion tri- oder höherfunktionellen Verbindungen in geringen Anteilen zur Erzielung eines gewissen Verweigerungsgrades ist ebenso möglich wie die bereits erwähnte mögliche Mitverwendung von tri- oder höherfunktionellen Polyisocyanaten zum gleichen Zweck.

Vorzugsweise einzusetzende Hydroxylverbindungen sind die in der Polyurethan-Chemie an sich bekannten Hydroxypolyester, Hydroxypolyäther, Hydroxypolythioäther, Hydroxypolyacetale, Hydroxypolycarbonate und/oder Hydroxypolyesteramide. Die in Frage kommenden Hydroxylgruppen aufweisenden Polyester wird z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z.B. Äthylenglykol, Propylenglykol-(1,2) und -(1,3), mit Butylenglykol-(1,4) und -(2,3), Hexandiol-(1,6), Octandiol-(1,8), Neopentylglykol-Cyclohexandimethanol-(1,4-bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. $\varepsilon$-Caprolacton oder Hydroxycarbonsäuren, z.B. $\omega$-Hydroxycapronsäure, sind einsetzbar.

Auch die erfindungsgemäß in Frage kommenden, vorzugsweise zwei Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorohydrin mit sich selbst, z.B. in Gegenwart von $BF_3$, oder durch Analagerung dieser Epoxide, gegebenenfalls im Gemisch oder nacheinander an Startkomponenten mit reaktionsfähigen Wasserstoffatomen wie Alkohole und Amine, z.B. Wasser, Äthylenglykol, Propylenglykol-(1,3) oder -(1,2), 4,4'-Dihydroxydiphenylpropan, Anilin, hergestellt.

Auch durch Vinylpolymerisate modifizierte Polyäther, wie sie z.B. durch Polymerisation von Styrol, Acrylnitril in Gegenwart von Polyäthern entstehen (amerikanische Patentschriften 3 383 351, 3 304 273, 3 523 093, 3 110 695, deutsche Patentschrift 1 152 536), sind ebenfalls geeignet. Die anteilig gegebenenfalls mitzuverwendenden höherfunktionellen Polyäther entstehen in analoger Weise durch an sich bekannte Alkoxylierung von höherfunktionellen Startermolekülen z.B. Ammoniak Äthanolamin, Äthylendiamin oder Sukrose.

Unter von Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioäthereseter, Polythioätheresteramide.

Als Polyacetale kommen z.B. die aus Glykolen, wie Diäthylenglykol, Triäthylenglykol, 4,4'-Diäthoxy-diphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder

Hexandiol-(1,6), Diäthylenglykol, Triäthylenglykol, Tetraäthylenglykol mit Diarylcarbonaten, z.B. Diphenylcarbonat oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyamiden und ihren Mischungen gewonnenen, vorwiegend lienearen Kondensate. Auch bereits Urethan- oder Harnstoffgruppen enthaltende Polyhydroxylverbindungen sind verwendbar.

Auch niedermolekulare Polyole können (mit)verwendet werden, wie z.B. Äthandiol, Propandiol-1,2 und -1,3, Butandiol-1,4 und -1,3, Pentandiole, Hexandiole, Trimethylolpropan, Hexantriole, Glycerin und Pentaerythrit oder auch Diamine wie z.B. Hexamethylendiamin oder 1-Amino-3,3,5-trimethyl-5-amino-cyclohexan.

Vertreter der genannten im erfindungsgemäßen Verfahren zu verwendenden Polyisocyanat- und Hydroxyl-Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Harnstoff-Handbuch, Band VII, Vieweg-Höchtlen, Carl-Hanser-Verlag, München, 1966, z.B. auf den Seiten 45 bis 71, beschrieben.

Falls beim erfindungsgemäßen Verfahren Oligourethane zum Einsatz gelangen, welche chemisch fixierte ionische oder nicht-ionische hydrophile Gruppen aufweisen, erfolgt deren Herstellung über die entsprechend modifizierten NCO-Präpolymeren. Diese hydrophil modifizierten Präpolymere werden nach bekannten Verfahren des Standes der Technik hergestellt, beispielsweise gemäß den in DE—ASen 1 495 745, 1 495 847, 2 446 440, 2 340 512, US—A 3 479 310, 3 756 992, GB—A 1 158 088 oder 1 076 688 beschriebenen Methoden. Dies bedeutet, daß bei der Herstellung der Präpolymeren neben den bereits beispielhaft genannten Ausgangsmaterialien chemisch fixierte hydrophile Gruppen aufweisende, vorzugsweise im Sinne der Isocyanatadditionsreaktion mono- und insbesondere difunktionelle Aufbaukomponenten der beispielhaft in den o.g. Literaturstelle bezüglich der Herstellung von wäßrigen Polyurethandispersionen oder -lösungen beschriebenen Art, d.h. beispielsweise ionische bzw. potentielle ionische Gruppen aufweisende Diisocyanate, Diamine oder Dihydroxyverbindungen bzw. Polyäthylenoxideinheiten aufweisende Diisocyanate oder Glykole mitverwendet werden.

Zu den bevorzugten hydrophil modifizierten Aufbaukomponenten gehören insbesondere die Sulfonatgruppen aufweisenden aliphatischen Diole gemäß DE—A 2 446 440, die kationischen oder auch anionischen einbaufähigen inneren Emulgatoren gemäß DE—A 26 51 506 und auch die in dieser Patentanmeldung beschriebenen, monofunktionellen einbaufähigen Polyäther.

Zu den bevorzugten (potentiellen) ionischen Aufbaukomponenten gehören insbesondere N-Alkyldialkanolamine wie z.B. N-Methyldiäthanolamin, N-Äthyldiäthanolamin oder N-Propyldipropanolamin, Diaminosulfonate der in CA—A 928 323 beschriebenen Art wie z.B. das Natriumsalz der N-(2-Aminoäthyl)-2-aminoäthansulfonsäure, Dimethylolpropionsäure und Sulfonatdiole der allgemeinen Formel

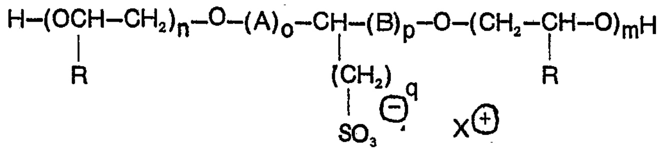

wobei

A und B für gleiche oder verschiedene zweiwertige aliphatische Kohlenwasserstoffreste mit 1 bis 6 Kohlenstoffatomen stehen,

R für Wasserstoff, einen aliphatischen Kohlenwasserstoffrest mit 1 bis 4 Kohlenstoffatomen oder einen Phenylrest steht,

$X^{\oplus}$ für ein Alkalimetallkation oder eine gegebenenfalls substituierte Ammoniumgruppe steht,

n und m für gleiche oder verschiedene Zahlen von 0 bis 30 stehen,

o und p für jeweils 0 oder 1 stehen und

q für eine ganze Zahl von 0 bis 2 steht.

Die Überführung der gegebenenfalls zunächst in das Polyadditionsprodukt eingebauten potentiellen ionischen Gruppen in ionische Gruppen geschieht in an sich bekannter Weise durch Neutralisation der potentiellen anionischen und kationischen Gruppen, durch Quaternierung von tertiären, aminischen Stickstoffatomen bzw. von tertiären phosphinischen Phosphoratomen, die in den erfindungsgemäßen Polyadditionsprodukten vorliegen können, wenn anstelle der beispielhaft genannten tertiären Amine mit gegenüber Isocyanatgruppen reaktionsfähigen Wasserstoffatomen diesen tertiären Aminen analoge tertiäre Phosphine eingebaut wurden, oder durch Überführung von gegebenenfalls vorliegenden Thioäthergruppen in die entsprechenden Sulfoniumsalze mit Quaternierungsmitteln. Geeignete Neutralisations- und Quarternierungsmittel sind in US—PS 3 479 310, Kolonne 6 beschrieben. Die Überführung der potentiellen ionischen Gruppen in ionische Gruppen kann sowohl vor der Überführung der NCO-Präpolymeren in die erfindungsgemäßen Ausgangsmaterialien als auch danach erfolgen.

Insbesondere beim Vorliegen von Carboxyl- oder Sulfonsäuregruppen als potentielle ionische Gruppen ist eine Neutralisation dieser Gruppen nach Überführung der NCO-Präpolymeren in die erfindungsgemäß als Ausgangsmaterial einzusetzenden Oligourethane denkbar.

Bei der Herstellung der NCO-Präpolymeren nach an sich bekannten Prinzipien des Standes der Technik werden die Reaktionspartner im allgemeinen in solchen Mengenverhältnissen eingesetzt, die einem Verhältnis von Isocyanatgruppen zu gegenüber NCO-reaktiven Wasserstoffatomen, vorzugsweise aus Hydroxylgruppen, von 1,05 bis 10, vorzugsweise von 1,1 bis 2,5 entsprechen.

Die Reihenfolge der Zugabe der einzelnen Reaktionspartner ist hierbei weitgehend beliebig. Man kann sowohl die Hydroxyverbindungen abmischen und dazu das Polyisocyanatzufügen oder auch zur Polyisocyanatkomponente das Gemisch der Hydroxylverbindungen oder die einzelnen Hydroxylverbindungen nach und nach eintragen.

Die Herstellung der NCO-Präpolymere erfolgt vorzugsweise in der Schmelze bei 30 bis 190°C, vorzugsweise bei 50 bis 120°C. Die Herstellung der Präpolymere könnte selbstverständlich auch in Gegenwart von organischen Lösungsmitteln erfolgen.

Geeignete Lösungsmittel, die z.B. in einer Menge bis zu 25 Gew.-%, bezogen auf den Feststoff, eingesetzt werden können, wären z.B. Aceton, Methyläthylketon, Essigsläureäthylester, Dimethylformamid oder Cyclohexanon.

Zur Herstellung der beim erfindungsgemäßen Verfahren als Ausgangsmaterialien einzusetzenden Oligourethane werden die beispielhaft genannten NCO-Präpolymeren vorzugsweise nach einer der beiden folgenden Methoden modifiziert:

Gemäß einer ersten Methode werden die NCO-Präpolymeren mit Hydrazinen der nachstehend beispielhaft genannten Art oder mit Diaminen zur Reaktion gebracht, deren Aminogruppen sich bezüglich ihrer Reaktivität gegenüber Isocyanatgruppen stark unterscheiden.

Geeignete Hydrazine sind alle beliebigen Hydrazine welche 2-NH-Gruppen aufweisen, d.h. sowohl Hydrazin bzw. Hydrazinhydrat selbst als auch beliebige mono- oder N,N'-disubstituierte Hydrazine. Als Substituenten der Hydrazine kommen insbesondere $C_1$—$C_4$-Alkylreste in Betracht. Beispiele geeigneter Hydrazine sind demzufolge Hydrazin, Hydrazinhydrat, N-Methylhydrazin, N,N'-Dimethylhydrazin, N-Butylhydrazin oder N,N'-Dibutylhydrazin.

Geeignete Diamine mit Aminogruppen unterschiedlicher Reaktivität sind beliebige, diesen Bedingungen entsprechende primäre und/oder sekundäre Aminogruppen aufweisende Diamine. Die unterschiedliche Reaktivität der Aminogruppen der Diamine kann durch sterische und/oder mesomere Effekte und/oder durch unterschiedliche Bindungsarten der Aminogruppen hervorgerufen sein. Zum erstgenannten Typ geeigneter Diamine gehörten 2,4-Diaminotoluol 1-Methyl-2,4-diamino-cyclohexan oder 2,4'-Diaminodiphenylmethan. Diamine mit Aminogruppen unterschiedlicher Reaktivität, bei denen diese unterschiedliche Reaktivität auf eine unterschiedliche Bindungsart der Aminogruppen zurückzuführen ist, bzw. bei denen zusätzlich auch sterische Effekte eine Rolle spielen können, sind z.B. 2-(2-Aminoäthyl)-anilin, 2-(3-Aminopropyl)-anilin, N-(3-Aminopropyl)anilin, N-(6-Amino-hexyl)anilin, 2-(2-Aminoäthyl)-naphthalin, N-(2-Aminoäthyl)anilin, 2-(2-Aminoäthyl-amino)-naphthalin, 2-Aminophenyl-(3-aminopropyl)-thioäther oder 2-Aminomethyl-anilin.

Auch einfache aromatische Diamine wie z.B. 1,4-Diaminobenzol sind geeignet, da die 2. Aminogruppe, bedingt durch Mesomerieeffekte nach Abreagieren der 1. Aminogruppe eine geringere Reaktionsbereitschaft gegenüber Isocyanatgruppen aufweist. Im allgemeinen sind solch Diamine geeignet, deren pKb-Werte für die beiden Aminogruppen in wäßrigem Milieu bei 25°C sich mindestens um den Faktor $10^3$, vorzugsweise um den Faktor $10^6$, unterscheiden.

Im allgemeinen weisen die Diamine bzw. Hydrazine ein Molekulargewicht von 32 bis 400 auf.

Die Umsetzung der NCO-Präpolymeren mit den Hydrazinen bzw. Diaminen erfolgt im allgemeinen in der Schmelze oder in Gegenwart inerter Lösungsmittel der bereits beispielhaft genannten Art bei 10 bis 120°C, wobei die Reaktionspartner vorzugsweise in solchen Mengen eingesetzt werden, daß auf jedes Mol NCO-Gruppen des NCO-Präpolymeren 0,8—1,2, vorzugsweise 1 Mol des Hydrazins bzw. Diamins enfällt.

Als inerte Lösungsmittel sind bevorzugt Keto-Gruppen enthaltende Lösungsmittel wie z.B. Aceton, Methyläthylketon, Methylisobutylketon oder Cyclohexanon geeignet.

Nach einer weiteren Methode der Umwandlung der NCO-Präpolymeren in erfindungsgemäß geeignete Ausgangsmaterialien erfolgt die Umsetzung der NCO-Präpolymeren mit Verbindungen, welche eine gegenüber Isocyanatgruppen reaktionsfähige Gruppe, vorzugsweise eine Hydroxylgruppe, und außerdem eine gegenüber Isocyanatgruppen inerte, verkappte Aminogruppe aufweisen, welche unter dem Einfluß von Wasser eine freie Aminogruppe bildet. Geeignete derartige Verbindungen sind insbesondere solche der Formel

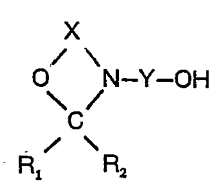

wobei

$R_1$ und $R_2$ für gleiche oder verschiedene Reste stehen und Wasserstoff, aliphatische Kohlenwasserstoffreste mit 1—4 Kohlenstoffatomen, cycloaliphatische Kohlenwasserstoffreste mit 5—7 Kohlenstoffatomen oder aromatische Kohlenwasserstoffreste mit 6—10 Kohlenstoffatomen bedeuten bzw. zusammen mit dem Ring-Kohlenstoffatom gemeinsam einen 5- oder 6-gliedrigen cycloaliphatischen Kohlenwasserstoff-Ring bilden können,

X für einen Rest der Formel

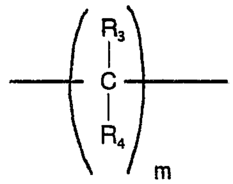

steht, wobei $R_3$ und $R_4$ für gleiche oder verschiedene Reste stehen und $C_1$—$C_4$-Alkylreste, vorzugsweise jedoch Wasserstoff bedeuten und m 2 oder 3 bedeuten,

Y für einen Rest der Formel

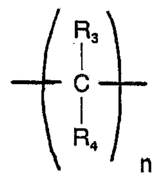

steht, in welcher $R_3$ und $R_4$ die bereits genannte Bedeutung haben und n für eine ganze Zahl von 2 bis 6 steht.

Die N-Hydroxyalkyl-oxazolidine werden nach literaturbekannten Methoden hergestellt, wobei ein Keton oder ein Aldehyd unter cyclisierender Dehydratisierung mit einem Bis-(hydroxyalkyl)-amin kondensiert wird und das Reaktionswasser üblicherweise durch ein inertes Schleppmittel bzw. durch die im Überschuß eingesetzte Carbonylverbindung azeotrop entfernt wird.

Als Carbonylverbindungen

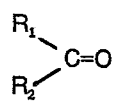

eignen sich insbesondere nachstehend aufgeführte Aldehyde und Ketone:

Formaldehyd, Acetaldehyd, Propionaldehyd, Butyraldehyd, Isobutyraldehyd, Benzaldehyd, Tetrahydrobenzaldehyd, Aceton, Methyläthylketon, Methylpropylketon, Methylisopropylketon, Diäthylketon, Methylbutylketon, Methylisobutylketon, Methyl-t-butylketon, Diisobutylketon, Cyclopentanon und Cyclohexanon Bevorzugt einzusetzende Carbonylverbindungen sind entsprechend der vorstehenden Definiton der bevorzugten Reste $R_2$ und $R_3$ Formaldehyd sowie die genannten aliphatischen Aldehyde bzw. Ketone.

Als Bis-(hydroxyalkyl)-amine

HO—X—NH—Y—OH

eignen sich besonders Bis-(2-hydroxyäthyl)-amin und Bis-(2-hydroxypropyl)-amin. Im Prinzip ebenso geeignet sind jedoch auch beispielsweise Bis-(2-hydroxybutyl)-amin, Bis-(2-hydroxyhexyl)-amin, Bis-(3-hydroxyhexyl)-amin, oder N-(2-hydroxypropyl)-N-(6-hydroxyhexyl)-amin.

Zur Überführung der NCO-Präpolymeren in die erfindungsgemäß einzusetzenden Ausgangsmaterialien nach dieser Methode werden die Hydroxyalkyloxazolidine mit den NCO-Präpolymeren bei 20 bis 120°C in Gegenwart oder auch in Abwesenheit von Lösungsmitteln umgesetzt, wobei die Mengenverhältnisse der Reaktionspartner so gewähalt werden, daß für jedes Mol Isocyanatgruppen des NCO-Präpolymeren im Reaktionsgemisch 0,8—1,2, vorzugsweise 1 Mol des Oxazolidin-Derivates vorliegt.

Eine weitere ebenfalls denkbare, jedoch weniger bevorzugte, Methode der Überführung der NCO-Präpolymeren in erfindungsgemäß geeignete Ausgangsmaterialien besteht in der Umsetzung der NCO-Präpolymeren mit einem hohen Überschuß eines beliebigen organischen Diamins, beispielsweise mit Äthylendiamin oder Hexamethylendiamin und anschließende Entfernung des nicht umgesetzten Überschusses, beispielsweise durch Destillation im Vakuum. Durch Verwendung eines hohen Überschusses wird ebenso wie bei den erstgenannten beiden Methoden sichergestellt, daß eine nennenswerte Molekülvergrößerung durch Kettenverlängerung unterbleibt. Hierbei wäre der Einsatz kontinuierlich laufender, hochtouriger Maschinen von Vorteil.

Zur Durchführung des erfindungsgemäßen Verfahrens wird num das wie beschrieben modifizierte NCO-Präpolymer mit endständigen Semicarbazidgruppen, Aminogruppen oder Oxazolidingruppen in Wasser dispergiert bzw. gelöst, wobei im Falle der Verwendung von Oxazolidingruppen aufweisenden Verbindungen sofort eine Hydrolyse unter Freisetzung der entsprechenden Aminogruppen aus dem Oxazolidinrest eintritt. Die Wassermenge wird bei diesem Dispergier- bzw. Lösungsvorgang im allgemeinen so bemessen, daß das Gewichtsverhältnis Präpolymer zu Wasser zwischen 65:35 und 5:95, vorzugsweise 55:45 und 20:80, liegt.

Die Temperatur des Dispergiervorgangs sollte hierbei oberhalb des Erweichungspunktes des Präpolymeren liegen, und zwar soweit oberhalb des Erweichungspunktes, daß ein Rühren der Schmelze gewährleistet ist. Bei rein nicht-ionischen Dispersionen oder Lösungen sollte die Dispergiertemperatur nicht wesentlich oberhalb 60°C liegen.

Der Dispergiervorgang kann gegebenenfalls auch durch Zusatz externer Emulgatoren unterstützt werden. Diese externen Emulgatoren werden gegebenenfalls bereits den NCO-Präpolymeren oder den aus ihnen hergestellten erfindungsgemäß einzusetzenden Ausgangsmaterialien zugegeben. Sie gelangen, falls überhaupt, im allgemeinen in Mengen von 1 bis 30, vorzugsweise 5 bis 20, Gew.-%, bezogen auf das NCO-Präpolymer bzw. Oligourethan, zum Einsatz. Geeignete derartige Emulgatoren sind beispielsweise von R. Heusch in "Emulsionen", Ullmann, Band 10, Seiten 449—473, Weinheim 1975, bescrieben. Geeignet sind sowohl ionische Emulgatoren wie z.B. Alkali- und Ammoniumsalze von langkettigen Fettsäuren oder langkettigen Aryl(Alkyl)sulfonsäuren, als auch nichtionische Emulgatoren wie z.B. äthoxylierte Alkylphenolen mit einem mittleren Molgewicht von 400 bis 10 000.

Das eigentliche erfindungsgemäße Verfahren besteht nun in der Kettenverlängerung der in wäßriger Lösung bzw. Dispersion vorliegenden Oligourethane mit geeigneten Kettenverlängerungsmitteln.

Geeignete Ketterverlängerungsmittel sind beliebige, vorzugsweise difunktionelle organische Verbindungen, welche mit den Amino- bzw. Semicarbazidgruppen des Oligourethans in Gegenwart des Wassers weitgehend selektiv mit diesen Gruppen im Sinne einer Additionsreaktion oder einer Kondensationsreaktion reagieren. Geeignete Kettenverlängerungsmittel sind dementsprechend hydrophobe Bis-Epoxide wie z.B. das Umsetzungsprodukte von Bisphenol A mit 2 Mol Epichlorohydrin oder auch höhermolekulare Bis-Epoxide eines maximalen Molekulargewichtes von 3000 und insbesondere hydrophobe Diisocyanate der Formel $Q(NCO)_2$ der bereits oben beispielhaft genannten Art.

Besonders bevorzugte Kettenverlängerungsmittel sind Hexamethylendiisocyanat, 1-Isocyanato-3,3,5-trimethyl-5-isocyanatomethylcyclohexan, 2,4-Diisocyanatotoluol, 2,6-Diisocyanatotoluol, 4,4'-Diisocyanato-diphenyl-methan oder beliebige Abmischungen dieser Diisocyanate. Auch vorzugsweise difunktionelle NCO-Präpolymere eines maximalen Molekulargewichtes von 3000, wie sie durch Umsetzung der beispielhaft genannten niedermolekularen Diisocyanate mit geeigneten Dihydroxyverbindungen in an sich bekannter Weise erhalten werden können, sind erfindungsgemäß als Kettenverlängerungsmittel geeignet.

Bei der erfindungsgemäßen Kettenverlängerungsreaktion werden die Kettenverlängerungsmittel im allgemeinen in solchen Mengen eingesetzt, daß für jedes Mol Aminogruppen bzw. Semicarbazidgruppen des Oligourethans 0,4 bis 1,0 Mol, vorzugsweise 0,5 Mol, des difunktionellen Kettenverlängerungsmittels zur Verfügung stehen. Die erfindungsgemäße Kettenverlängerungsreaktion erfolgt im allgemeinen durch Einrühren des gegenbenefalls in einem inerten Lösungsmittel gelösten Kettenverlängerungsmittels in die vorgelegte Dispersion bzw. Lösung. Vorzugsweise werden flüssige Kettenverlängerungsmittel ohne Lösungsmittel eingesetzt. Die erfindungsgemäße Kettenverlängerungsreaktion erfolge im allgemeinen im Temperaturbereich von 0 bis 100, vorzugsweise 10 bis 70°C. Es ist prinzipiell auch möglich, verkappte Di-oder Polyisocyanate einzusetzen, die gegebenenfalls erst nach erfolgter Applikation der Dispersion beim Ausheizen durch Abspalten des Verkappungsmittels verlängernd oder vernetzend wirken.

Die erfindungsgemäß zugänglichen Dispersionen bzw. Lösungen eignen sich für die bekannten Einsatzgebiete der wäßrigen Polyurethandispersionen. Sie lassen sich z.B. für die Lederzurichtung oder Wollveredlung einsetzen oder können für die Beschichtung der unterschiedlichsten Materialien, wie z.B. Textilien, Kunststoffe, Glas, Metalle, Papier oder Holz verwandt werden, wobei sie u.a. als Lacke oder auch Klebstoffe Anwendung finden. Weitere Verwendungsmöglichkeiten liegen z.B. auf den Gebieten Glasfaserschlichte oder Dispergierhilfsmittel. Auch sind diese Produkte als Zusatz zu Kunstoffdispersionen anzusetzen oder als Bindemittel für z.B. Kork- oder Holzmehl, Glasfasern, Asbest, papierartige Materialien, Plastik- oder Gummiabfällen und keramische Materialien.

Die erfindungsgemäßen Dispersionen bzw. Lösungen können vor ihrer Applikation mit beliebigen Zusätzen versehen werden. Hierzu gehören insbesondere Vernetzungsmittel wie z.B. Formaldehyd, Formaldehyd abspaltende Verbindungen oder Melaminharze; Polymerlatices verschiedenster Provenienz, wie z.B. solche auf Basis von Polyacrylnitril, Butadien-Acrylnitril-Copolymerisaten oder aber auch auf Basis von gepfropften Copolymerisaten auf Basis von Acrylnitril, Butadien- und Styrol, sowie solche auf Basis von Poly(meth)-acrylaten. Auch eine Nachbehandlung der erfindungsgemäßen Dispersionen bzw. Lösungen gemäß dem Verfahren der DE—A 27 08 442 ist möglich.

## Beispiel 1

Ansatz:

744,0 g Adipinsäure-Phthalsäure-Äthylenglykol-Polyester (OHZ 66) (PE)

142,8 g propoxyliertes Addukt aus 2-Butendiol-1,4 und Na $HSO_3$ (MG 457, 80%ig in Toluol (AD)

173,0 g Hexamethylendiisocyanat-(1,6) (H)

34,2 g Hydrazin-Hydrat

2450 g entsalztes Wasser

76 g Isophorondiisocyanat (IPDI)

Durchführung:

Der Polyester (PE) und das Addukt (AD) werden bei 110°C im Wasserstrahlvakuum unter Rühren 45 Minuten entwässert, auf 80°C abgekühlt und bei 80°C mit dem Diisocyanat (H) umgesetzt. Nach ca. 40 Minuten ist ein NCO-Wert von 2,75% erreicht. Die Schmelze wird auf 45 bis 50°C abgekühlt und mit Hydrazin-Hydrat verrührt bis kein Isocyanat mehr gefunden wird. Unter schnellem Rühren wird die Schmelze mit Wasser bei 50°C dispergiert.

Man erhält eine feinteilige Dispersion mit einer Fordbecherviskosität (4 mm Düse) von 21 Sekunden bei 29,8% Feststoff. Das mittlere Molekulargewicht des Oligourethans beträgt 3080. Der Feststoff enthält 1,9% $SO_3^{\ominus}$-Gruppen. In die Semicarbazidendständige Dispersion wird bei Raumtemperatur IPDI eingerührt. Nach 5- bis 10-minütigem Rühren wird kein Isocyanat mehr gefunden. Es liegt eine feinteilige Dispersion mit einem pH-Wert von 6,3 vor, die beim Ausheizen zu nicht klebenden Filmen auftrocknet.

Die Zugfestigkeit des Films beträgt 14,7 MPa bei einer Bruchdehnung von 340%.

## Beispiel 2

Ansatz:

350,0 g Phthalsäure-Adipinsäure-Äthylenglykol-Polyester (OHZ 64,1) (PE)

87,4 g propoxyliertes Addukt aus Butendiol-1,4 und Na $HSO_3$ (MG 427,66%ig in Toluol) (AD)

12,0 g Butandiol-1,4

134,8 g Hexamethylendiisocyanat-(1,6) (H)

11,4 g Isophorondiamin (IPDA) in

40,0 g Aceton

62,6 g β-Hydroxyäthyl-oxazolidin

1450,0 g entsalztes Wasser

Durchführung:

Der Polyester (PE) und das Addukt (AD) werden bei 110°C unter Rühren im Wasserstrahlvakuum entwässert. Es wird auf 80°C abgekühlt und Butandiol eingerührt. Nach 10-minütigem Rühren wird das Diisocyanat (H) zugegeben und bei 80°C verrührt bis ein NCO-Wert von 5% erreicht ist (ca. 30 Minuten). Dann wird das IPDA in Aceton zugegeben und 30 Minuten bei 80°C verrührt. Es wird ein NCO-Wert von 3,0% gefunden. Bei 80°C wird die Schmelze nun solange mit dem Oxazolidin verrührt, bis kein Isocyanat mehr gefunden wird (ca. 1 Stunde). Hierbei wird die geringe Menge Aceton im Vakuum abgezogen. Anschließend wird unter intensivem Rühren mit Wasser bei 80°C dispergiert.

Die äußerst feinteilige Dispersion hat bei einem Feststoff von 28,75% eine Fordbecherviskosität (4 mm Düse) von 18 Sekunden. Das mittlere Molekulargewicht des Oligourethans beträgt 2350. Der Feststoff enthält 21,5 Milliäquivalente pro 100 g (1,72%) an $SO_3^{\ominus}$-Gruppen.

Zu 600 g der Dispersion werden bei Raumtemperatur zunächst 16,3 g Isophorondiisocyanat gegeben und bei dieser Temperatur 1 Stunde gerührt. Es werden keine NCO-Gruppen mehr gefunden. Die Dispersion ist feinteilig und zeigt im durchscheinenden Licht einen Tyndall-Effekt. Ihre Fordbecherviskosität (4 mm Düse) beträgt bei 29,8% Feststoffgehalt 20 Sekunden. Der pH-Wert beträgt 7,1. Die Filme aus dieser Dispersion sind transparent und hart und sind für die Lederzurichtung geeignet.

Beispiel 3

Ansatz:

350,0 g Phthalsäure-Adipinsäure-Äthylenglykol-Polyester (OHZ 64,1) (PE)

87,4 g propoxyliertes Addukt aus 2-Butendiol-1,4 und Na $HSO_3$ (MG 427; 66%ig in Toluol) (AD)

9,0 g Butandiol-1,4

102,3 g Hexamethylendiisocyanat-1,6 (H)

52,2 g N-Phenyl-diaminopropan-1,3 (NPDA)

1250,0 g entsalztes Wasser

69,1 g Isophorondiisocyanat (IPDI)

Durchführung:

Der Polyester (PE) und das Addukt (AD) werden bei 110°C unter Rühren im Wasserstrahlvakuum entwässert. Es wird auf 80°C abgekühlt und Butandiol eingerührt. Nach 10-minütigem Rühren wird das Diisocyanat (H) zugegeben und bei 80°C verrührt bis ein NCO-Wert von 2,8% erreicht ist (ca. 2 Stunden). Dann wird bei 60°C das NPDA zugegeben und bei 60°C verrührt, bis die Schmelze NCO-frei ist (ca. 30 Minuten). Der Feststoff wird mit Wasser bei 60°C sehr gut zu einer feinteiligen Dispersion gelöst, die bei einem Feststoff von 30,4% eine Fordbecherviskosität (4 mm Düse) von 12 Sekunden hat. Das mittlere Molekulargewicht des Feststoffes beträgt 3280. Der Feststoff enthält 23,6 Milliäquivalente pro 100 g (1,89%) an $SO_3^{\ominus}$-Gruppen.

Die aminendständige Oligourethan-Dispersion wird bei Raumtemperatur mit 38,6 g IPDI 2 Stunden verrührt. Anschließend werden nochmals 30,5 g IPDI zugegeben, um gemäß der DE—A 27 08 442 die Dispersionsteilchen mit einer Harnstoff-Hülle zu umhüllen. Die Dispersion wird anschließend 1 Stunde bei 80°C ausgeheizt.

Die Fordbecherviskosität (4 mm Düse) der Dispersion beträgt bei einem Feststoffgehalt von 32,5% 12,7 Sekunden. Die Dispersion ist zentrifugenstabil (15 Minuten lang 3600 U/min ohne Sedimentation) und weist einen Tyndall-Effekt im durchscheindenden Licht auf. Der pH-Wert beträgt 5,4.

Die Filme aus dieser Dispersion werden klar und durchsichtig; sie kleben nicht, sondern zeigen einen angenehm trockenen Griff. Die Dispersion ist für die Beschichtung von Textilien geeignet.

Die Zugfestigkeit des Films beträgt 23,1 MPa bei einer Bruchdehnung von 916%.

Beispiel 4

Ansatz:

350,0 g Phthalsäure-Adipinsäure-Äthylenglykol-Polyester (OHZ 64,1) (PE)

87,4 g propoxyliertes Addukt aus 2-Butendiol-1,4 und Na $HSO_3$ (MG 427; 66%ig in Toluol) (AD)

9,0 g Butandiol-(1,4)

102,3 g Hexamethylendiisocyanat-(1,6) (H)

58,5 g o-Anilin-aminoäthylthioäther

1250,0 g entsalztes Wasser

Durchführung: (vgl. Beispiel 3)

Man erhält eine feinteilige aminendständige Dispersion, die im durchscheinenden Licht einen Tyndall-Effekt aufweist. Die Fordbecherviskosität (4 mm Düse) beträgt bei einem Feststoff von 30% 38 Sekunden. Das mittlere Molekulargewicht des Feststoffes beträgt 3320. Der Feststoff enthält 23,4 Milliäquivalente pro 100 g (1,87%) an $SO_3^{\ominus}$-Gruppen.

Beispiel 4a

In 607 g der obigen 30%igen Dispersion werden 9,6 g eines 80:20 Gemisches der 2,4- bzw. 2,6-Diisocyanatotoluole gegeben und 10 Minuten verrührt. Zur weiteren Isocyanat-Modifizierung analog der DE—A 27 08 442 werden weitere 9,6 g des obigen Isocyanat-Gemisches bei 25°C zugegeben und gerührt bis kein Isocyanat mehr gefunden wird, wobei die Temperatur gegen Ende der Reaktion (nach ca. 3 Stunden) auf 90°C erhöht wird.

Man erhält eine sedimentstabile Dispersion, die im durchscheinenden Licht einen Tyndall-Effekt zeigt. Bei einem Feststoff von 32,8% hat die Dispersion eine Fordbecherviskosität (4 mm Düse) von 12,7 Sekunden. Ihr pH-Wert beträgt 4,5. Der Film aus dieser Dispersion ist sehr hart und klebt nicht.

Beispiel 4b

Zu 601 g der Dispersion aus Beispiel 4 werden 18,4 g eines Bis-Epoxids (auf Bisphenol A gestartet, MG 338) in 50 g Aceton gelöst bei Raumtemperatur zugegeben. Es wird anschließend auf 80°C aufgeheizt und 4 Stunden bei dieser Temperatur gerührt. Hierbei wird die geringe Menge Aceton im Wasserstrahlvakuum abgezogen. Man erhält eine zentrifugenstabile Dispersion (15 Minuten, 3500 U/min) mit einer Fordbecherauslaufzeit (4 mm Düse) von 14,4 Sekunden bei einem Feststoffgehalt von 39,5%. Der pH-Wert beträgt 4,5. Es entsteht beim Auftragen der Dispersion ein weitgehend klebfreier Film, der als Haftstrich auf den verschiedensten Materialien wie z.B. Textil oder Leder eingesetzt werden kann.

Beispiel 4c

Zu 500 g der Dispersion aus Beispiel 4 werden 11,4 g geschmolzenes, warmes 4,4'-Diisocyanato-diphenyl-methan gegeben, langsam unter Rühren auf 80°C erwärmt. Bei dieser Temperatur wird 4 Stunden nachgerührt. Die Dispersion ist isocyanatfrei.

Man erhält eine feinteilige Dispersion, die im durchscheinenden Licht einen Tyndall-Effekt aufweist. Die Dispersion hat einen pH-Wert von 7,5. Die Fordbecherauslaufzeit (4 mm Düse) beträgt 35,3 Sekunden bei einem Feststoffgehalt von 35,3%.

Der Film aus der Dispersion ist klebfrei und hart.

Beispiel 5

Ansatz:

| | | |
|---|---|---|
| 350,0 | g | Adipinsäure-Phthalsäure-Äthylenglykol-Polyester (OHZ 66) (PE) |
| 87,4 | g | propoxyliertes Addukt aus 2-Butendiol-1,4 und Na $HSO_3$ (MG 427; 66%ig in Toluol) (AD) |
| 9,0 | g | Butandiol-1,4 |
| 102,3 | g | Hexamethylendiisocyanat-1,6 (H) |
| 17,4 | g | Hydrazin-Hydrat in |
| 70,0 | g | Aceton |
| 1250,0 | g | entsalztes Wasser |
| 67,4 | g | Isophorondiisocyanat (IPDI) |

Durchführung:

Vergleiche Beispiel 4; aber statt des o-Anilin-aminoäthylthioäthers wird ein Gemisch aus Hydrazin-Hydrat und Aceton zugesetzt, das zuvor ca. 1 Stunde auf dem Magnetrührer gerührt wurde. Nach 15 Minuten wird die NCO-freie Schmelze mit Wasser dispergiert. Anschließend wird das Aceton im Wasserstrahlvakuum bei ca. 30—35°C abgezogen. Die Semicarbazidendständige Oligourethandispersion wird in zwei Stufen mit IPDI umgesetzt. In der ersten Stufe wird mit 38,6 g IPDI bei 25°C das Semicarbazid umgesetzt, in der zweiten Stufe wird mit IPDI analog der DE—A 27 08 442 die Dispersion modifiziert, wobei das IPDI bei 25°C zugegeben wird und 3 Stunden bei 25—30°C verrührt wird.

Dann wird die Dispersion bei 80°C ausgeheizt.

Man erhält eine feinteilige Dispersion mit einem Tyndall-Effekt im durchscheindenden Licht, die bei einem Feststoffgehalt von 31,4% eine Fordbecherviskosität (4 mm Düse) von 11,5 Sekunden hat. Der pH-Wert beträgt 5,4. Die Filme kleben nicht und haben einen angenehmen trockenen Griff.

**Patentansprüche**

1. Verfahren zur Herstellung von wäßrigen Dispersionen oder Lösungen von Isocyanat-Polyadditionsprodukten, dadurch gekennzeichnet, daß man Oligourethane, welche

a) ein durchschnittliches Molekulargewicht von weniger als 15 000 aufweisen,

b) 0—120 Milliäquivalente pro 100 g Feststoff an eingebauten ionischen Gruppen und/oder 0—25 Gew.-% an eingebauten, innerhalb einer Polyätherkette vorliegenden Äthylenoxideinheiten

—$CH_2$—$CH_2$—O— und/oder 0—30 Gew.-% an, externen, nicht chemisch fixierten Emulgatoren aufweisen, wobei die Gesamtmenge der genannten hydrophilen Gruppen bzw. Hilfsmittel in einer die Dispergierbarkeit bzw. Löslichkeit der Oligourethane in Wasser gewährleistenden Menge vorliegt,

c) endständige primäre oder sekundäre aminische Aminogruppen oder endständige Semicarbazidgruppen mit mindestens einer endständigen —NH-Gruppierung aufweisen; in wäßriger Phase mit einem mindestens difunktionellen mit den endständigen Amino- bzw. Semicarbazidgruppen im Sinne einer Additionsreaktion oder Kondensationsreaktion reagierenden Kettenverlängerungsmittel unter Kettenverlängerung der Oligourethane zur Reaktion bringt.

2. Verfahren gemäß Anspruch 1, dadurch gekennzeichnet, daß man als Kettenverlängerungsmittel hydrophobe Diisocyanate verwendet.

3. Verwendung der gemäß Anspruch 1 und 2 hergestellten Dispersionen bzw. Lösungen zur Herstellung von Überzügen und Beschichtungen.

## Claims

1. Process for the preparation of aqueous dispersions or solutions of isocyanate polyaddition products, characterised in that oligourethanes which

a) have an average molecular weight of less than 15,000,

b) contain from 0—120 milliequivalents, per 100 g of solid content of built-in ionic groups and/or from 0 to 25% by weight of built-in ethylene oxide units —$CH_2$—$CH_2$—O— present within a polyether chain and/or from 0—30% by weight of external emulsifiers which are not chemically fixed, the total quantity of the above mentioned hydrophilic groups or auxiliary agents being sufficient to ensure the dispersibility or solubility of the oligourethanes in water, and

c) contain primary or secondary aminic amino end groups or semicarbazide end groups with at least one NH group in the end position

are reacted in the aqueous phase with a chain lengthening agent which is at least difunctional and which undergoes an addition reaction or condensation reaction with the amino or semicarbazide end groups to effect chain lengthening of the oligourethans.

2. Process according to Claim 1, characterised in that the chain lengthening agents used are hydrophobic diisocyanates.

3. Use of the dispersions or solutions prepared according to Claims 1 and 2 for the production of films and coatings.

## Revendications

1. Procédé de production de dispersions ou solutions aqueuses de polymères d'addition d'un isocyanate, caractérisé en ce qu'il consiste à faire réagir des oligouréthanes qui

a) ont un poids moléculaire moyen inférieur à 15 000,

b) présentent 0 à 120 milliéquivalents, par 100 g de matière solide, de groupes ioniques incorporés et/ou 0 à 25% en poids de motifs oxyde d'éthylène —$CH_2$—$CH_2$—O— incorporés, présents à l'intérieur d'une chaîne polyéther et/ou 0 à 30% en poids d'émulsionnants externes non fixés chimiquement, la quantité totale des groupes ou adjuvants hydrophiles mentionnés se situant dans une plage assurant la dispersibilité ou la solubilité des oligouréthannes dans l'eau,

c) présentent des groupes amino primaires ou secondaires terminaux ou des groupes semicarbazide terminaux ayant au moins un groupement —NH terminal;

en phase aqueuse avec un agent d'allongement de chaîne au moins difonctionnel réagissant avec les groupes amino ou semicarbazide terminaux dans le sens d'une réaction d'addition ou d'une réaction de condensation, en prolongeant la chaîne des oligouréthannes.

2. Procédé suivant la revendication 1, caractérisé en ce que des diisocyanates hydrophobes sont utilisés comme agents d'allongement de chaîne.

3. Utilisation des dispersions ou solutions préparées suivant l'une des revendications 1 et 2 pour la production de revêtements et d'enductions.